# EUROPÄISCHE PATENTSCHRIFT

(11) **EP 1 924 429 B1**
(45) Veröffentlichungstag und Bekanntmachung des Hinweises auf die Patenterteilung: **18.02.2009**
(21) Anmeldenummer: 06776072.8
(22) Anmeldetag: 23.06.2006
(51) Int. Cl.: B29D 30/16, B29D 30/30, B29D 30/44

(54) **VORRICHTUNG ZUM AUFSPULEN EINES STREIFENFÖRMIGEN KAUTSCHUKMATERIALS**
DEVICE FOR WINDING UP A STRIP-SHAPED RUBBER MATERIAL
DISPOSITIF D'ENROULEMENT D'UN MATERIAU DE CAOUTCHOUC EN FORME DE BANDE

(30) Priorität: 01.09.2005 DE 102005041565
(43) Veröffentlichungstag der Anmeldung: 28.05.2008
(73) Patentinhaber: Continental Aktiengesellschaft, 30165 Hannover (DE)
(72) Erfinder: GEFFERT, Ulrich, 31848 Bad Münder (DE); KASTENS, Sven, 30171 Hannover (DE)
(74) Vertreter: Finger, Karsten
(86) Internationale Anmeldenummer: PCT/EP2006/006036
(87) Internationale Veröffentlichungsnummer: WO 2007/025583

(56) Entgegenhaltungen:
- EP-A- 0 776 757
- WO-A-02/094545
- US-A- 5 335 415
- US-A1- 2003 066 610
- PATENT ABSTRACTS OF JAPAN Bd. 009, Nr. 077 (M-369), 6. April 1985 (1985-04-06) & JP 59 207227 A (BRIDGESTONE KK), 24. November 1984 (1984-11-24)

## Beschreibung

Die Erfindung betrifft eine Vorrichtung zum Aufspulen eines streifenförmigen Kautschukmaterials auf einen Reifenrohling mit einem Spulkopf, der mit Mitteln zur Ausformung von Streifen aus Kautschukmaterial, mit Mitteln zum Zuführen von strang-, schnur- oder bandförmigem Kautschukmaterial zu den Mitteln zur Ausformung von Streifen aus Kautschukmaterial, mit Mitteln zum Schneiden des strang-, schnur- oder bandförmigen Kautschukmaterials zu Streifen vorbestimmter Länge und mit Mitteln zum Auflegen der geschnittenen und ausgeformten Streifen auf den Reifenrohling ausgebildet ist, sowie ein Verfahren zum gesteuerten Bestücken eines Spulkopfes zum Aufspulen von streifenförmigem Kautschukmaterial auf einen Reifenrohling mit streifenförmigem Kautschukmaterial.

Aus der EP1094930B1 ist es bekannt, ein extrudiertes Rundschnurkautschukmaterial kontinuierlich in einem Spulkopf einem Kalander zur Ausformung zuzuführen und das ausgeformte, streifenförmige Kautschukmaterial über eine Rolle auf einen Reifenrohling zur Ausformung einer Seitenwand schraubenförmig aufzuspulen. Das Kautschukmaterial wird bei Anwendung eines solchen Verfahrens entsprechend der gewünschten Länge des aufzuspulenden Streifens abgelängt.

Das Ablängen erfolgt bei einem solchen Verfahren entweder durch Schneiden hinter dem Kalander zur Ausformung, wobei durch das Schneiden das ausgeformte Material wieder ungewünscht deformiert werden kann, oder es erfolgt vor dem Kalander, wobei die Zuführung des Anfangs des folgenden Kautschukmaterials zum Kalander hierdurch ungenau erfolgen kann, wodurch der Anfang des neu ausgeformten Materials unerwünschte Abweichungen von seiner Sollform aufweisen kann. Beides kann zu unerwünschten Ungleichförmigkeiten beim auf den Reifenrohling aufgespulten Kautschukstreifen und möglicherweise im fertigen Reifen führen. Darüber hinaus besteht die Möglichkeit unerwünschter Lufteinschlüsse beim Aufwickeln auf den Reifenrohling.

Der Erfindung liegt daher die Aufgabe zugrunde in einfacher Weise eine verbesserte Herstellung des Reifenrohlings mit aufgespultem Kautschukstreifen zu ermöglichen.

Erfindungsgemäß wird die Aufgabe durch die Ausbildung einer Vorrichtung zum Aufspulen eines streifenförmigen Kautschukmaterials auf einen Reifenrohling mit einem Spulkopf, der mit Mitteln zur Ausformung von Streifen aus Kautschukmaterial, mit Mitteln zum Zuführen von strang-, schnur- oder bandförmigem Kautschukmaterial zu den Mitteln zur Ausformung von Streifen aus Kautschukmaterial, mit Mitteln zum Schneiden des strang-, schnur- oder bandförmigen Kautschukmaterials zu Streifen vorbestimmter Länge und mit Mitteln zum Auflegen der geschnittenen und ausgeformten Streifen auf den Reifenrohling ausgebildet ist, gemäß den Merkmalen des Anspruchs 1 gelöst, bei der die Mittel zum Zuführen von strang-, schnur- oder bandförmigem Kautschukmaterial zu den Mitteln zur Ausformung von Streifen aus Kautschukmaterial zur Herstellung eines Haltekontaktes gesteuert quer zur Förderrichtung des strang-, schnur- oder bandförmigen Kautschukmaterials aus einer Ruheposition in eine Halteposition und zum Lösen des Haltekontaktes quer zur Förderrichtung des strang- oder bandförmigen Kautschukmaterials aus der Halteposition in eine Ruheposition und zur Förderung bei Einnahme der Halteposition längs der Förderrichtung aus einer ersten Förderposition in Förderrichtung in eine zweite Förderposition, in der das Kautschukmaterial, von den Mitteln zur Ausformung erfasst werden kann, bewegbar sind.

Unabhängig davon wird die Aufgabe auch durch ein Verfahren zum gesteuerten Bestücken eines Spulkopfes zum Aufspulen von streifenförmigem Kautschukmaterial auf einen Reifenrohling mit streifenförmigem Kautschukmaterial gemäß den Merkmalen von Anspruch 11 gelöst, bei dem zunächst strang-, schnur- oder bandförmiges Kautschukmaterial einer Ausformeinrichtung zugeführt wird, bei dem Mittel zum Zuführen von strang-, schnur- oder bandförmigem Kautschukmaterial zu Mitteln zur Ausformung von Streifen aus Kautschukmaterial gesteuert quer zur Förderrichtung des dem Spulkopf zugeführten strang-, schnur- oder bandförmigen Kautschukmaterials aus einer Ruheposition in eine Halteposition zum Ergreifen des strang-, schnur- oder bandförmigen Kautschukmaterials bewegt werden, bei dem dann nach Ergreifen des strang-, schnur- oder bandförmigen Kautschukmaterials die Mittel zum Zuführen von strang-, schnur- oder bandförmigem Kautschukmaterial zu den Mitteln zur Ausformung von Streifen aus Kautschukmaterial zur Förderung unter Beibehaltung des Haltekontakts längs der Förderrichtung aus einer ersten Förderposition in Förderrichtung in eine zweite Förderposition bewegt werden, in der das Kautschukmaterial von den Mitteln zur Ausformung erfasst wird, und bei dem nach Erfassen des Kautschukmaterials durch die Mittel zur Ausformung von Streifen aus Kautschukmaterial die Mittel zum Zuführen von strang-, schnur- oder bandförmigem Kautschukmaterial zu den Mitteln zur Ausformung von Streifen aus Kautschukmaterial unter oder nach Lösen des Haltekontaktes quer zur Förderrichtung gesteuert quer zur Förderrichtung des strang-, schnur- oder bandförmigen Kautschukmaterials aus seiner Halteposition zum Halten des strang-, schnur- oder bandförmigen Kautschukmaterials in eine Ruheposition bewegt werden.

Trotz Ablängung vor den Mitteln zur Ausformung kann der Anfang eines Materialstreifens jeweils sehr zuverlässig und genau positioniert den Mitteln zur Ausformung übergeben werden, so dass das gesamte aufzuspulende streifenförmige Kautschukmaterial gleichmäßig ausgeformt aufgespult werden kann.

Besonders vorteilhaft ist die Ausbildung einer Vorrichtung gemäß den Merkmalen von Anspruch 2, bei der Mittel zum gesteuerten Dehnen der für den Schnitt jeweils vorbestimmten Längenabschnitte des strang-, schnur- oder bandförmigen Kautschukmaterials in seiner Längsrichtung ausgebildet sind. Hierdurch wird noch im Bereich des Spulkopfes direkt nach Erfassen des strang-, schnur- oder bandförmige Kautschukmaterials durch die Mittel zur Ausformung das strang-, schnur- oder bandförmige Kautschukmaterial im Erstreckungsbereich der zu schneidenden Position in seiner Länge längs der Förderrichtung gedehnt und hierdurch im Querschnitt verjüngt. Der Schnitt erfolgt dann im verjüngten Bereich. Auch nach Profilierung durch die Mittel zur Ausformung ist das Ende des abgelängten Streifens und der Anfang des nächsten Streifens mit einem weitgehend gleichmäßig verjüngten Querschnitt ausgebildet. Beim Aufspulen auf den Reifenrohling ergibt sich am Anfang und am Ende des aufzuspulenden Streifens ein vergleichmäßigter Dickenübergang. Lufteinschlüsse werden erschwert.

Besonders vorteilhaft ist die Ausbildung einer Vorrichtung gemäß den Merkmalen von Anspruch 3, bei der die Mittel zur Ausformung der geschnittenen Streifen und die Mittel zum Zuführen von strang-, schnur- oder bandförmigem Kautschukmaterial,zu den Mitteln zur Ausformung von Streifen aus Kautschukmaterial zusammenwirkend als Mittel zum gesteuerten Dehnen der zum Entstehen der Schnittkante vorbestimmten Längenabschnitte des strang-, schnur- oder bandförmigen Kautschukmaterials in seiner Längsrichtung ausgebildet sind.

Besonders vorteilhaft ist die Ausbildung einer Vorrichtung gemäß den Merkmalen von Anspruch 4, bei der die Mittel zur Ausformung der geschnittenen Streifen und die Mittel zum Zuführen von strang-, schnur- oder bandförmigem Kautschukmaterial zu den Mitteln zur Ausformung von Streifen aus Kautschukmaterial gesteuert voneinander entfernbar und wieder auf einander zu bewegbar ausgebildet sind und hierdurch zusammenwirkend als Mittel zum gesteuerten Dehnen der für den Schnitt vorbestimmten Längenabschnitte des strang-, schnur- oder bandförmigen Kautschukmaterials in seiner Längsrichtung.

Besonders vorteilhaft ist die Ausbildung einer Vorrichtung gemäß den Merkmalen von Anspruch 5, bei der die Mittel zur Ausformung der geschnittenen Streifen einen Kalander aufweisen.

Besonders vorteilhaft ist die Ausbildung einer Vorrichtung gemäß den Merkmalen von Anspruch 6, bei der die Mittel zum Auflegen der geschnittenen und ausgeformten Streifen auf den Reifenrohling eine rotatorisch um eine Drehachse umlaufende - insbesondere angetriebene - Führungsfläche zur Führung und zum Andrücken des Streifens auf den Reifenrohling aufweisen.

Besonders vorteilhaft ist die Ausbildung einer Vorrichtung gemäß den Merkmalen von Anspruch 7, bei der die Mittel zum Zuführen von strang-, schnur- oder bandförmigem Kautschukmaterial zu den Mitteln zur Ausformung von Streifen aus Kautschukmaterial zur Herstellung gesteuert quer zur Förderrichtung des strang-, schnur- oder bandförmigen Kautschukmaterials aus einer Ruheposition in eine Halteposition und zum Lösen des Haltekontaktes quer zur Förderrichtung des strang- oder bandförmigen Kautschukmaterials aus der Haltposition in eine Ruheposition und zur Förderung bei Einnahme der Halteposition längs der Förderrichtung aus einer ersten Förderposition in Förderrichtung in eine zweite Förderposition, in der das Kautschukmaterial, von den Mitteln zur Ausformung erfasst werden kann und nach Erfassen des Kautschukmaterials durch die Mittel zur Ausformung wieder entgegen der Förderrichtung zum Dehnen des Kautschukmaterials zurück in eine dritte Förderposition bewegbar sind.

Besonders vorteilhaft ist die Ausbildung einer Vorrichtung gemäß den Merkmalen von Anspruch 8, bei der die Mittel zum Zuführen von strang-, schnur- oder bandförmigem Kautschukmaterial zu den Mitteln zur Ausformung von Streifen aus Kautschukmaterial pneumatisch oder hydraulisch in Querrichtung zur Förderrichtung betätigbare Halteelemente sind.

Besonders vorteilhaft ist die Ausbildung einer Vorrichtung gemäß den Merkmalen von Anspruch 9, bei der die Mittel zum Zuführen von strang-, schnur- oder bandförmigem Kautschukmaterial zu den Mitteln zur Ausformung von Streifen aus Kautschukmaterial ein paar zur Förderebene spiegelbildlich einander gegenüberliegend angeordnete pneumatisch oder hydraulisch in Querrichtung zur Förderrichtung betätigbare Halteelemente sind.

Besonders vorteilhaft ist die Ausbildung einer Vorrichtung gemäß den Merkmalen von Anspruch 10, wobei die Mittel zum Zuführen von strang-, schnur- oder bandförmigem Kautschukmaterial zu den Mitteln zur Ausformung von Streifen aus Kautschukmaterial in einer gesteuert auf die Mitteln zur Ausformung von Streifen aus Kautschukmaterial zu- und wieder weg bewegbar - insbesondere verschiebbar - im Spulkopfrahmen gelagerten Lagerplatte ausgebildet sind.

Besonders vorteilhaft ist die Ausbildung einer Vorrichtung gemäß den Merkmalen von Anspruch 11, bei der der Spulkopf gesteuert an die zu belegende Fläche des Reifenrohlings heran- und wieder wegbewegbar ausgebildet ist.

Die Erfindung wird im Folgenden an Hand der in den Figuren 1 bis 5 dargestellten Ausführungsbeispiele näher erläutert. Darin zeigen:
- Fig.1: Schematische Darstellung einer Station zur Bespulung eines Reifenrohlings mit streifenförmigem Kautschukmaterial mit auf einer Trommel aufgebautem Reifenrohling und einem Spulkopf,
- Fig. 2: Schematische Schnittdarstellung des Spulkopfs,
- Fig. 3: Vereinfachte schematische Darstellung des Spulkopfes mit in Fig. 3a bis Fig. 3g dargestellten Verfahrensschritten zur Erläuterung der Zufuhr und des Ablängens von Kautschukmaterial,
- Fig. 4: Darstellung des Aufspulprozesses eines Kautschukstreifens zur Erzeugung einer Reifenseitenwand,
- Fig. 5: Darstellung des Aufspulprozesses eines Kautschukstreifens zur Erzeugung eines Laufstreifens.

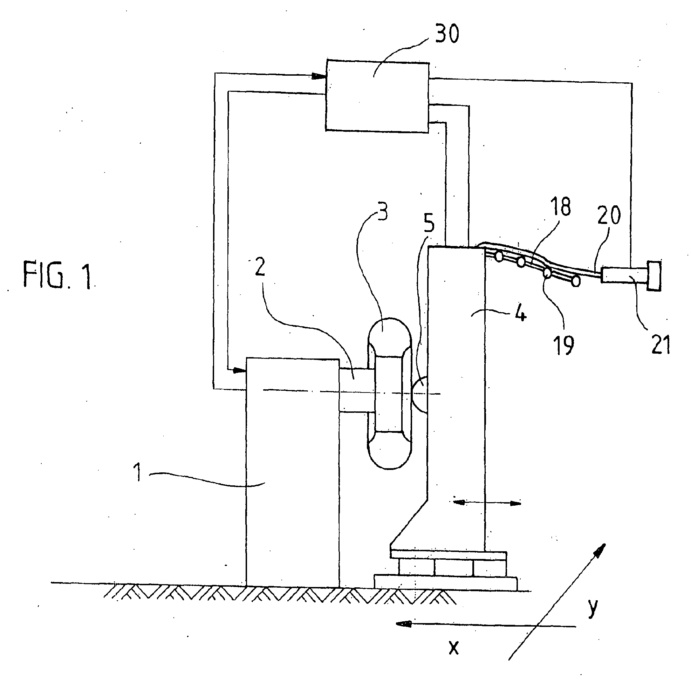

Fig. 1 zeigt einen Reifenrohling, der auf einem in einem Gestell 1 drehbar gelagerten und über eine Steuereinheit 30 rotatorisch gesteuert angetriebenen Spannkopf 2 koaxial zum Spannkopf 2 aufgebaut und befestigt ist.

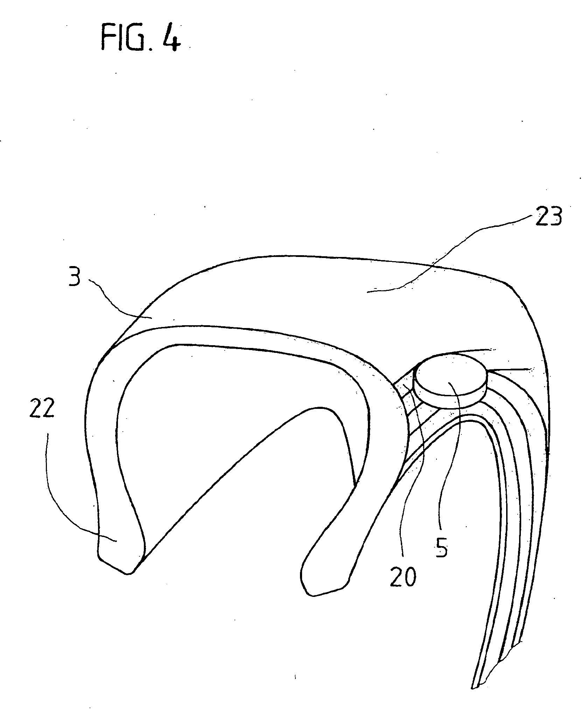

Der Reifenrohling besteht - wie in Fig. 4 dargestellt - aus einer in herkömmlicher Weise ausgebildeten Karkasse 3 aus einer oder mehreren nicht dargestellten Lagen von in Kautschuk eingebetteten Festigkeitsträgern, die sich von Wulstbereich 22 zu Wulstbereich 22 des Reifenrohlings axial erstrecken. Der Reifenrohling ist torusförmig ausgebildet und auf dem Spannkopf 2 befestigt.

In Fig. 1 ist darüber hinaus ein Spulkopf 4 dargestellt. Aus einem Extruder 21 bekannter Art wird rundschnurförmiges oder bandförmiges Kautschukmaterial 20 über einen am Spulkopf 4 befestigten Rollenträger mit in Förderrichtung hintereinander in einem Gestell 18 des Rollenträgers drehbar gelagerten Förderrollen 19, und im Anschluss daran zwischen zwei Halteplatten 16 und 17 hindurch, die jeweils an einem Hubkolben 14 bzw. 15 eines pneumatisch oder hydraulisch betätigbaren und von der Steuereinheit 30 gesteuert betätigten Hubkolbenzylinders in einem im Spulkopf 4 verschiebbar gelagerten Rahmen 13 befestigt sind, im Anschluss daran zwischen zwei jeweils an einem hydraulisch oder pneumatisch betätigbaren und von der Steuereinheit 30 gesteuert betätigten mit jeweils einem Hubkolbenmesser 10 bzw. 11 versehenen Hubkolben eines Hubkolbenzylinders einer Schneideeinrichtung 9 hindurch und zwischen zwei in Förderrichtung nachgeordneten zusammenwirkenden gesteuert von der Steuereinrichtung 30 rotatorisch angetriebenen Kalanderwalzen 7 und 8 eines Formkalanders 6 von den Kalanderwalzen hindurch gezogen und über Umlenkrollen bekannter Art hinweg auf eine nachgeordnete Auflegerolle 5 weiterfördert werden. Über die Auflegerolle 5 wird das von den profilierten Kalanderwalzen 6 und 7 des Formkalanders 6 ausgeformte bandförmige Material - wie in Fig. 1 und Fig. 4 zu erkennen ist - zwischen Wulstbereich 22 und Lauffläche des zu fertigenden Reifens auf die Karkasse des Reifenrohlings unter Druck aufgerollt.

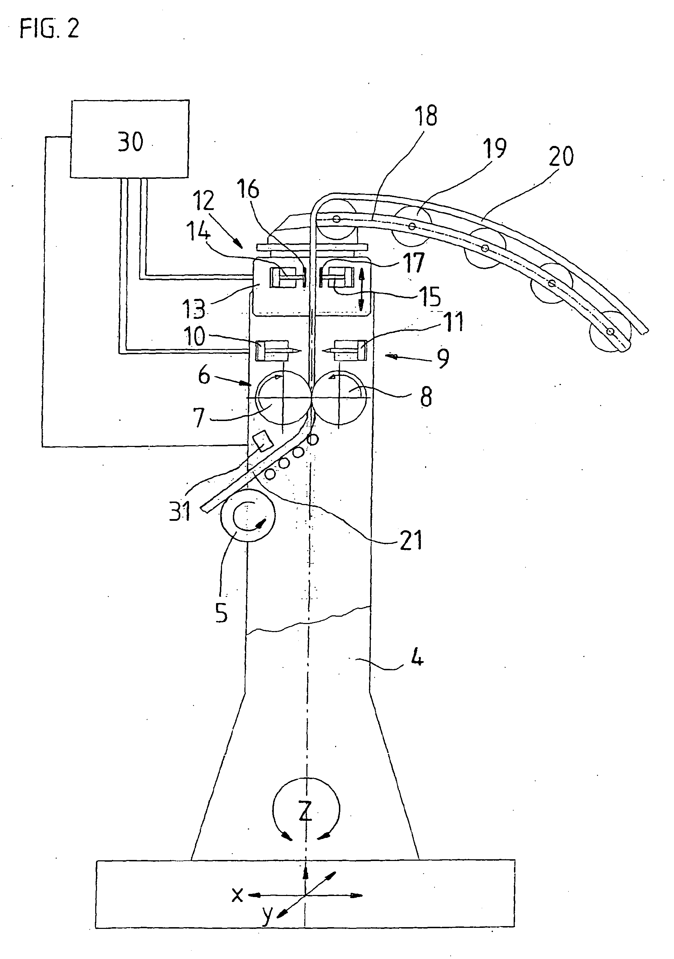

Hierzu wird zunächst der Spulkopf 4 in die parallel zur Rotationsachse des Spannkopfes 2 in den Figuren 1 und 2 dargestellte x-Richtung soweit verschoben, dass die Auflegerolle 5 in Berührkontakt mit dem Reifenrohling gerät. Durch von der Steuereinheit 30 gesteuertes, stufenloses Verschieben über eine nicht dargestellte bekannte Verschiebeeinrichtung in die Koordinatenrichtung x parallel zur Rotationsachse des Spannkopfs 2 und die Koordinatenrichtung y senkrecht zur Rotationsachse des Spannkopfs 2 kann dabei der Spulkopf 4 jeweils so positioniert werden, dass die Auflegerolle 5 mit gewünschtem Druck im Berührkontakt zum Reifenrohling 3 steht. Darüber hinaus ist - wie in Fig. 2 dargestellt ist - der Spulkopf 4 in bekannter nicht dargestellter Weise um eine senkrecht zur x-y-Ebene ausgerichtete Achse z stufenlos gesteuert schwenkbar, so dass über die Steuereinheit 30 der Spulkopf 4 jeweils so positioniert wird kann, dass die Aufliegerolle 5 jeweils mit ihrer Mantelfläche die zum Aufspulen gewünschte Ausrichtung zur Oberfläche des Reifenrohlings einnimmt.

Hierdurch wird - wie in Fig. 4 dargestellt ist - während der gesteuerten Rotation des Reifenrohlings um die Rotationsachse des Spannkopfs 2 das durch die Kalanderwalzen 7 und 8 ausgeformte Kautschukmaterial 20 von radial innen nach radial außen kontinuierlich auf die Karkasse aufgespult. Dabei können die einzelnen Windungen nebeneinander oder aber bei Bedarf auch einander überlappend ausgespult werden. Dies ist durch entsprechenden Vorschub der Bewegung des Spulkopfes 4 in der x-y-Ebene entlang der Kontur des torusförmigen Reifenrohlings möglich. Bei Bedarf wird hierzu kotinuierlich die Ausrichtung der Auflegerolle 5 zur Oberfläche der Kontur des torusförmigen Reifenrohlings durch gesteuertes Schwenken des Spulkopfs 4 um die z-Achse nach gestellt.

Bei Erfordernis wird in einer nicht dargestellten Ausführung zusätzlich die Auflegerolle 5 in z-Richtung stufenlos gesteuert verschiebbar ausgebildet ist. Bei einer derartigen Ausführung kann auch die Aufspulposition der Auflegerolle 5 gegenüber dem Reifenrohling in z-Richtung individuell gesteuert eingestellt oder während des Spulens verändert werden.

Sobald das zwischen den Hubkolbenmessem 10 und 11 hindurch gezogene rundschnurförmige oder bandförmige Kautschukmaterial eine derartige Länge erreicht hat, dass es der für die Herstellung der Seitenwand des Reifenrohlings gewünschten Aufspullänge entspricht, wird durch Steuereinheit 30 ein Schneideprozess ausgelöst. Hierzu werden die Hubkolben der Hubkolbenmesser10 und 11 pneumatisch bzw. hydraulisch im jeweiligen Hubkolbenzylinder auf einander zu verschoben und hierdurch das rundschnurförmige bzw. bandförmige Kautschukmaterial durch die von beiden Seiten einwirkenden Hubkolbenmesser 10 und 11 zerschnitten.

Sobald das durch den Schneideprozess erzeugte Ende des abgeschnittenen Kautschukstreifens von der Auflegerolle 5 auf die Seitenwand des Reifenrohlings aufgedrückt wurde, wird der Spulkopf durch gesteuertes Verschieben in der x-y-Ebene vom Reifenrohling entfernt.

Zum Bespulen einer neuen Reifenseitenwand wird ein neuer Reifenrohling auf den Spannkopf 2 aufgespannt und der Spulkopf 4 wiederum gesteuert an den Reifenrohling soweit herangeführt, dass der Spulprozess zum Aufbau der Reifenseitenwand eingeleitet werden kann.

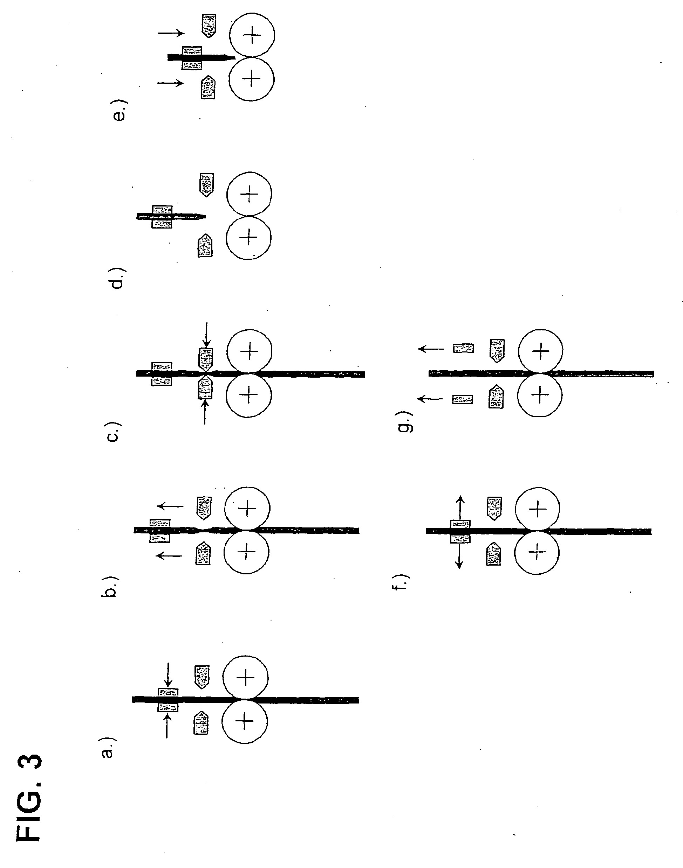

Zum Einführen des Anfangs eines vom Extruder neu erzeugten rundschnurförmigen oder bandförmigen Kautschukstranges zwischen die Kalanderwalzen 7 und 8 werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Förderrichtung auf die Kalanderwalzen 7 und 8 des Formkalanders 6 zu bewegt, so dass das Kautschukbandes 20 zwischen den Kalanderwalzen 7 und 8 eingerührt und von den Kalanderwalzen 7 und 8 durch den in den Kalanderspalt zwischen den Kalanderwalzen 7 und 8 eingezogen wird. Dieser Zustand ist in Fig. 3a dargestellt. Danach wird - wie in Fig. 3f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.3g dargestellt ist - der Rahmen 13 wiederum in seine Ausgangsposition angehoben.

Zum Schneiden werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Fördergeschwindigkeit der Kalanderwalzen 7 und 8 in Förderrichtung auf die Kalanderwalzen 7 und 8 des Formkalanders 6 zu bewegt, so dass das Kautschukbandes 20 in Richtung des zwischen den Kalanderwalzen 7 und 8 gebildeten Kalanderspaltes geführt wird, wobei das Kautschukband 20 weiterhin von den Kalanderwalzen 7 und 8 durch den in den Kalanderspalt zwischen den Kalanderwalzen 7 und 8 eingezogen wird. Dieser Zustand ist in Fig. 3a dargestellt. Danach wird der Rahmen 13 wieder in Gegenförderrichtung gesteuert zurückbewegt. Das zwischen den Halteplatten 16 und 17 und zwischen den Kalanderwalzen 7 und 8 jeweils eingespannte Kautschukband 20 wird hierdurch zwischen den beiden Einspannpositionen gedehnt. Hierdurch entsteht eine Einschnürung des Kautschukbandes 20. Die Position der Hubkolbenmesser 10 und 11 im Spulkopf 4 ist dabei so gewählt, dass diese im Bereich des erwarteten dünnsten Querschnitts des gedehnten Materials positioniert sind. Dies ist in Fig. 3b dargestellt. Danach werden - wie in Fig. 3c zu erkennen ist - die Hubkolbenmesser 10 und 11 hydraulisch bzw. pneumatisch gesteuert aufeinander zu bewegt, so dass das Kautschukband 20 im Bereich des dünnsten Querschnitts durchtrennt wird. Das Ende des vorangegangenen Streifenmaterials wird weiter zum Reifenrohling gefördert. Wie in Fig.3d zu erkennen ist, ist auch der Anfang des nächsten Streifenmaterials verjüngt ausgebildet und wird - wie in Fig. 3e zu erkennen ist - durch Verschieben des Rahmens 13 in Förderrichtung in den Kalanderspalt zwischen die Kalanderwalzen 7 bzw. 8 eingeführt. Danach wird - wie in Fig. 3f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.3g dargestellt ist - der Rahmen 13 wiederum in seine Ausgangsposition angehoben.

Wie in den Figuren 3c zu erkennen, ist auch das Ende des vorangegangenen Streifens verjüngt ausgebildet. Die Verjüngung von Anfang und Ende des Kautschukstreifens ermöglichen beim Aufspulen auf die Oberfläche des Reifenrohlings am Anfang und am Ende einen gleichmäßigen Übergang zur Oberfläche des Reifenrohlings.

Zur Ermittlung der Länge des Kautschukstreifenmaterials zur richtigen Ablängung auf die aufzuspulende Länge wird in einer Ausführung die Länge aus den vorhandenen Daten über Fördergeschwindigkeit, die beispielsweise aus der Drehgeschwindigkeit der Kalanderwalzen 7 und 8 ermittelt wird oder direkt gemessen wird, und der Förderzeit ermittelt. In einer alternativen Ausführung wird - wie in Fig. 2 dargestellt - die Länge des geförderten Kautschukbandmaterials mittels im Spulkopf ausgebildeten Sensoren 31 zur Ermittlung eines Kautschukbandes bekannter Art gemessen und diese Daten an die Steuereinheit zur Verarbeitung weitergeleitet. Die Sensoren sind beispielsweise zwischen Schneideeinrichtung mit Hubschneidemessern 10 und 11 und dem Formkalander 6 mit den Kalanderwalzen 7 und 8 oder aber - wie in Fig. 2 dargestellt ist - in Förderrichtung dem Kalander angeordnet.

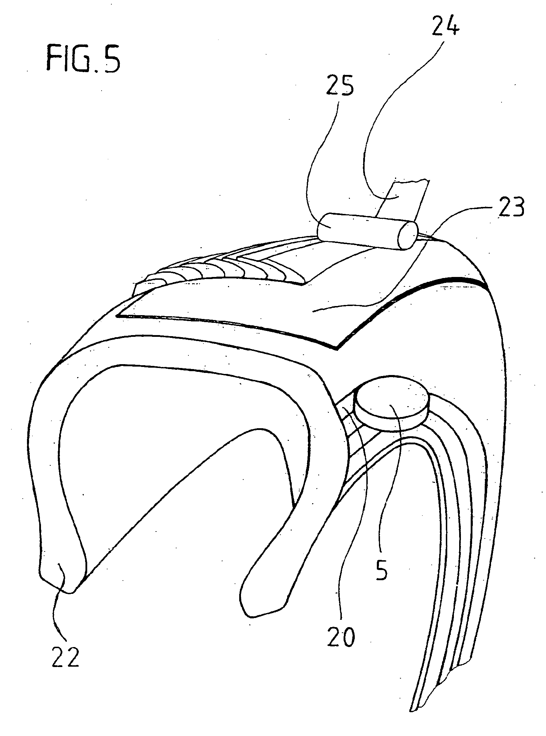

Wie in Fig. 5 dargestellt ist, wird in einer anderen Ausführung auch der Laufstreifen eines Reifens über einen - wie oben dargestellten - Spulkopf 4 aus einem in entsprechend gleicher Weise hergestellten Kautschukstreifen über eine Auflegerolle 25 des Spulkopfs 4 aufgespult. In Fig. 5 ist dabei eine Ausführung dargestellt, bei der der Kautschukstreifen auf einen auf die Karkasse des Reifenrohlings aufgebauten Gürtel 23 bekannter Art aufgespult wird.

Es ist möglich, unterschiedliche Dicken des Laufstreifens und / oder der Seitenwand durch gesteuerte Änderung des Vorschubes des Spulkopfes entlang der zu bespulenden Reifenkontur und somit durch gezielte unterschiedliche Überlappung der einzelnen nebeneinander ausgebildeten Windungen des gespulten Streifenmaterials auszubilden.

Hierzu kann zusätzlich durch gezielte Veränderung des Ausrichtewinkels der Auflegerolle 5 bzw. der Auflegerolle 25 zur Oberfläche des Reifenrohlings die Konturierung und Dickenverteilung gesteuert beeinflusst werden.

Ebenso ist es möglich, den Laufstreifen bzw. die Seitenwand aus mehreren derartigen Kautschukstreifen aufzuspulen. Dabei können diese Kautschukstreifen bei Bedarf aus unterschiedlichem Kautschukmaterial und/oder unterschiedlich ausgeformt sein. Die unterschiedliche Ausformung erfolgt beispielsweise durch geänderte Kalanderwalzen 7 und 7 des Formkalanders.

### Bezugszeichenliste

### (Teil der Beschreibung)

- 1: Gestell
- 2: Spannkopf
- 3: Karkasse
- 4: Spulkopf
- 5: Auflegerolle
- 6: Formkalander
- 7: Kalanderwalze
- 8: Kalanderwalze
- 9: Schneideeinrichtung
- 10: Hubkolbenmesser
- 11: Hubkolbenmesser
- 12: Zuführeinrichtung
- 13: Rahmen
- 14: Hubkolben
- 15: Hubkolben
- 16: Halteplatte
- 17: Halteplatte
- 18: Träger
- 19: Führungsrolle
- 20: Kautschukband
- 21: Extruder
- 22: Wulstbereich
- 23: Gürtellagen
- 24: Kautschukband
- 25: Auflegerolle
- 30: Steuereinheit

## Patentansprüche

1. Vorrichtung zum Aufspulen eines streifenförmigen Kautschukmaterials auf einen Reifenrohling mit einem Spulkopf (4), der mit Mitteln zur Ausformung (6) von Streifen aus Kautschukmaterial (20), mit Mitteln zum Zuführen (16,17) von strang-, schnur- oder bandförmigem Kautschukmaterial (20) zu den Mitteln zur Ausformung (6) von Streifen aus Kautschukmaterial (20), mit Mitteln zum Schneiden (9) des strang-, schnur- oder bandförmigen Kautschukmaterials (20) zu Streifen vorbestimmter Länge und mit Mitteln zum Auflegen (5) der geschnittenen und ausgeformten Streifen auf den Reifenrohling ausgebildet ist,
**dadurch gekennzeichnet,**
**dass** die Mittel zum Zuführen (16,17) von strang-, schnur- oder bandförmigem Kautschukmaterial (20) zu den Mitteln zur Ausformung (6) von Streifen aus Kautschukmaterial (20) zur Herstellung eines **Haltekontaktes** gesteuert quer zur Förderrichtung des strang-, schnur- oder bandförmigen Kautschukmaterials (20) aus einer Ruheposition in eine Halteposition und zum Lösen des Haltekontaktes quer zur Förderrichtung des strang-, schnur- oder bandförmigen Kautschukmaterials (20) aus der Halteposition in eine Ruheposition und zur Förderung bei Einnahme der Halteposition längs der Förderrichtung aus einer ersten Förderposition in Förderrichtung in eine zweite Förderposition, in der das Kautschukmaterial (20), von den Mitteln zur Ausformung (6) erfasst werden kann, bewegbar sind.

2. Vorrichtung zum Aufspulen gemäß den Merkmalen von Anspruch 1,
wobei Mittel zum gesteuerten Dehnen (6,16,17,14,15,13) der für den Schnitt jeweils vorbestimmten Längenabschnitte des strang-, schnur- oder bandförmigen Kautschukmaterials (20) in seiner Längsrichtung ausgebildet sind.

3. Vorrichtung zum Aufspulen gemäß den Merkmalen von Anspruch 2,
wobei die Mittel zur Ausformung (6) der geschnittenen Streifen und die Mittel zum Zuführen (16,17) von strang-, schnur- oder bandförmigem Kautschukmaterial (20) zu den Mitteln zur Ausformung (6) von Streifen aus Kautschukmaterial zusammenwirkend als Mittel zum gesteuerten Dehnen (6,16,17) der zum Entstehen der Schnittkante vorbestimmten Längenabschnitte des strang-, schnur- oder bandförmigen Kautschukmaterials (20) in seiner Längsrichtung ausgebildet sind.

4. Vorrichtung zum Aufspulen gemäß den Merkmalen von Anspruch 3,
wobei die Mittel zur Ausformung (6) der geschnittenen Streifen und die Mittel zum Zuführen (16,17) von strang-, schnur- oder bandförmigem Kautschukmaterial zu den Mitteln zur Ausformung (6) von Streifen aus Kautschukmaterial gesteuert voneinander entfernbar und wieder auf einander zu bewegbar ausgebildet sind und hierdurch zusammenwirkend als Mittel zum gesteuerten Dehnen (6,16,17) der für den Schnitt vorbestimmten Längenabschnitte des strang-, schnur- oder bandförmigen Kautschukmaterials (20) in seiner Längsrichtung.

5. Vorrichtung zum Aufspulen gemäß den Merkmalen von einem oder mehreren der vorangegangenen Ansprüche,
wobei die Mittel zur Ausformung (6) der geschnittenen Streifen einen Kalander (6) aufweisen.

6. Vorrichtung zum Aufspulen gemäß den Merkmalen von einem oder mehreren der vorangegangenen Ansprüche,
wobei die Mittel zum Auflegen (5) der geschnittenen und ausgeformten Streifen auf den Reifenrohling eine rotatorisch um eine Drehachse umlaufende - insbesondere angetriebene - Führungsfläche zur Führung und zum Andrücken des Streifens auf den Reifenrohling aufweisen.

7. Vorrichtung zum Aufspulen gemäß den Merkmalen von einem oder mehreren der vorangegangenen Ansprüche,
wobei die Mittel zum Zuführen (16,17) von strang-, schnur- oder bandförmigem Kautschukmaterial (20) zu den Mitteln zur Ausformung (6) von Streifen aus Kautschukmaterial zur Herstellung des Haltekontaktes gesteuert quer zur Förderrichtung des strang-, schnur- oder bandförmigen Kautschukmaterials aus einer Ruheposition in eine Halteposition und zum Lösen des Haltekontaktes quer zur Förderrichtung des strang- oder bandförmigen Kautschukmaterials (20) aus der Halteposition in eine Ruheposition und zur Förderung bei Einnahme der Halteposition längs der Förderrichtung aus einer ersten Förderposition in Förderrichtung in eine zweite Förderposition, in der das Kautschukmaterial von den Mitteln zur Ausformung (6) erfasst werden kann, und nach Erfassen des Kautschukmaterials durch die Mittel zur Ausformung (6) wieder entgegen der Förderrichtung zum Dehnen des Kautschukmaterials zurück in eine dritte Förderposition bewegbar sind.

8. Vorrichtung zum Aufspulen gemäß den Merkmalen von einem oder mehreren der vorangegangenen Ansprüche,
wobei die Mittel zum Zuführen (16,17) von strang-, schnur- oder bandförmigem Kautschukmaterial (20) zu den Mitteln zur Ausformung (6) von Streifen aus Kautschukmaterial pneumatisch oder hydraulisch in Querrichtung zur Förderrichtung betätigbare Halteelemente (16,17) sind.

9. Vorrichtung zum Aufspulen gemäß den Merkmalen von einem oder mehreren der vorangegangenen Ansprüche,
wobei die Mittel zum Zuführen (16,17) von strang-, schnur- oder bandförmigem Kautschukmaterial (20) zu den Mitteln zur Ausformung (6) von Streifen aus Kautschukmaterial ein paar zur Förderebene spiegelbildlich einander gegenüberliegend angeordnete pneumatisch oder hydraulisch in Querrichtung zur Förderrichtung betätigbare Halteelemente (16,17) sind.

10. Vorrichtung zum Aufspulen gemäß den Merkmalen von einem oder mehreren der vorangegangenen Ansprüche,
wobei die Mittel zum Zuführen (16,17) von strang-, schnur- oder bandförmigem Kautschukmaterial (20) zu den Mitteln zur Ausformung (6) von Streifen aus Kautschukmaterial in einer gesteuert auf die Mittel zur Ausformung (6) von Streifen aus Kautschukmaterial zu- und wieder weg bewegbar - insbesondere verschiebbar - im Spulkopfrahmen gelagerten Lagerplatte (13) ausgebildet sind.

11. Vorrichtung zum Aufspulen gemäß den Merkmalen von einem oder mehreren der vorangegangenen Ansprüche,
wobei der Spulkopf (4) gesteuert an die zu belegende Fläche des Reifenrohlings heran- und wieder wegbewegbar ausgebildet ist.

12. Verfahren zum gesteuerten Bestücken eines Spulkopfes (4) zum Aufspulen von streifenförmigem Kautschukmaterial auf einen Reifenrohling mit streifenförmigem Kautschukmaterial, bei dem zunächst strang-, schnur- oder bandförmiges Kautschukmaterial einer Ausformeinrichtung (6) zugeführt wird, bei dem Mittel zum Zuführen (16,17) von strang-, schnur- oder bandförmigem Kautschukmaterial (20) zu Mitteln zur Ausformung (6) von Streifen aus Kautschukmaterial gesteuert quer zur Förderrichtung des dem Spulkopf (4) zugeführten strang-, schnur- oder bandförmigen Kautschukmaterials (20) aus einer Ruheposition in eine Halteposition zum Ergreifen des strang-, schnur- oder bandförmigen Kautschukmaterials (20) bewegt werden, bei dem dann nach Ergreifen des strang-, schnur- oder bandförmigen Kautschukmaterials (20) die Mittel zum Zuführen (16,17) von strang-, schnur- oder bandförmigem Kautschukmaterial (20) zu den Mitteln zur Ausformung (6) von Streifen aus Kautschukmaterial zur Förderung unter Beibehaltung des Haltekontakts längs der Förderrichtung aus einer ersten Förderposition in Förderrichtung in eine zweite Förderposition bewegt werden, in der das Kautschukmaterial (20) von den Mitteln zur Ausformung (6) erfasst wird, und bei dem nach Erfassen des Kautschukmaterials (20) durch die Mittel zur Ausformung (6) von Streifen aus Kautschukmaterial die Mittel zum Zuführen (16,17) von strang-, schnur- oder bandförmigem Kautschukmaterial (20) zu den Mitteln zur Ausformung (6) von Streifen aus Kautschukmaterial unter oder nach Lösen des Haltekontaktes gesteuert quer zur Förderrichtung des strang-, schnur- oder bandförmigen Kautschukmaterials (20) aus seiner Halteposition zum Halten des strang-, schnur- oder bandförmigen Kautschukmaterials (20) in eine Ruheposition bewegt werden.

## Claims

1. Apparatus for winding a strip-shaped rubber material on to a green tyre, with a winding head (4) which is configured with means (6) for shaping strips of rubber material (20), with means (16, 17) for feeding strand-shaped, cord-shaped or band-shaped rubber material (20) to the means (6) for shaping strips of rubber material (20), with means (9) for cutting the strand-shaped, cord-shaped or band-shaped rubber material (20) into strips of predetermined length and with means (5) for applying the cut and shaped strips to the green tyre, **characterised in that** the means (16, 17) for feeding strand-shaped, cord-shaped or band-shaped rubber material (20) to the means (6) for shaping strips of rubber material (20) are movable in a controlled manner, for establishing a holding contact, transversely to the conveying direction of the strand-shaped, cord-shaped or band-shaped rubber material (20) from a rest position to a holding position and, for releasing the holding contact, are movable transversely to the conveying direction of the strand-shaped, cord-shaped or band-shaped rubber material (20) from the holding position to a rest position and, for conveying while adopting the holding position, are movable along the conveying direction from a first conveying position in the conveying direction to a second conveying position in which the rubber material (20) can be grasped by the shaping means (6).

2. Winding apparatus according to the features of Claim 1, **characterised in that** means (6, 16, 17, 14, 15, 13) are implemented for the controlled stretching, in the longitudinal direction thereof, of the longitudinal sections of the strand-shaped, cord-shaped or band-shaped rubber material (20) predetermined for cutting.

3. Winding apparatus according to the features of Claim 2, **characterised in that** the means (6) for shaping the cut strips, and the means (16, 17) for feeding strand-shaped, cord-shaped or band-shaped rubber material (20) to the means (6) for shaping strips of rubber material, are configured in a cooperating manner as means (6, 16, 17) for the controlled stretching, in the longitudinal direction thereof, of the longitudinal sections of the strand-shaped, cord-shaped or band-shaped rubber material (20) predetermined for the production of the cut edge.

4. Winding apparatus according to the features of Claim 3, **characterised in that** the means (6) for shaping the cut strips and the means (16, 17) for feeding strand-shaped, cord-shaped or band-shaped rubber material to the means (6) for shaping strips of rubber material are movable away from one another and back towards one another in a controlled manner and thereby cooperate as means for the controlled stretching (6, 16, 17), in the longitudinal direction thereof, of the longitudinal sections of the strand-shaped, cord-shaped or band-shaped rubber material (20) predetermined for cutting.

5. Winding apparatus according to the features of one or more of the preceding claims, **characterised in that** the means (6) for shaping the cut strips comprise a calendar (6).

6. Winding apparatus according to the features of one or more of the preceding claims, **characterised in that** the means (5) for applying the cut and shaped strips to the green tyre have an - in particular power-driven - guide face circulating in a rotary manner about an axis of rotation for guiding and pressing the strip on to the green tyre.

7. Winding apparatus according to the features of one or more of the preceding claims, **characterised in that** the means (16, 17) for feeding strand-shaped, cord-shaped or band-shaped rubber material (20) to the means (6) for shaping strips of rubber material are movable in a controlled manner, for establishing the holding contact, transversely to the conveying direction of the strand-shaped, cord-shaped or band-shaped rubber material, from a rest position to a holding position and, for releasing the holding contact, are movable transversely to the conveying direction of the strand-shaped or band-shaped rubber material (20) from the holding position to a rest position and, for conveying while adopting the holding position, are movable along the conveying direction from a first conveying position in the conveying direction to a second conveying position in which the rubber material can be grasped by the shaping means (6) and, after the rubber material has been grasped by the shaping means (6), are movable back against the conveying direction to a third conveying position, in order to stretch the rubber material.

8. Winding apparatus according to the features of one or more of the preceding claims, **characterised in that** the means (16, 17) for feeding strand-shaped, cord-shaped or band-shaped rubber material (20) to the means (6) for shaping strips of rubber material are holding elements (16, 17) which are actuatable pneumatically or hydraulically in a direction transverse to the conveying direction.

9. Winding apparatus according to the features of one or more of the preceding claims, **characterised in that** the means (16, 17) for feeding strand-shaped, cord-shaped or band-shaped rubber material (20) to the means (6) for shaping strips of rubber material are a pair of holding elements (16, 17) which are actuatable pneumatically or hydraulically in a direction transverse to the conveying direction and are arranged opposite one another in a mirror-symmetrical manner with respect to the conveying plane.

10. Winding apparatus according to the features of one or more of the preceding claims, **characterised in that** the means (16, 17) for feeding strand-shaped, cord-shaped or band-shaped rubber material (20) to the means (6) for shaping strips of rubber material are implemented in a bearing plate (13) mounted in the winding head frame, which bearing plate (13) is movable - in particular slidable - in a controlled manner towards and away from the means (6) for shaping strips of rubber material.

11. Winding apparatus according to the features of one or more of the preceding claims, **characterised in that** the winding head (4) is configured movably in a controlled manner towards and away from the surface of the green tyre to be covered.

12. Method for the controlled supplying of a winding head (4) for winding strip-shaped rubber material on to a green tyre with strip-shaped rubber material, by which strand-shaped, cord-shaped or band-shaped rubber material is first fed to a shaping device (6), by which means (16, 17) for feeding strand-shaped, cord-shaped or band-shaped rubber material (20) to means (6) for shaping strips of rubber material are moved in a controlled manner, transversely to the conveying direction of the strand-shaped, cord-shaped or band-shaped rubber material (20) fed to the winding head (4), from a rest position to a holding position for grasping the strand-shaped, cord-shaped or band-shaped rubber material (20), by which, after the strand-shaped, cord-shaped or band-shaped rubber material (20) has been grasped, the means (16, 17) for feeding strand-shaped, cord-shaped or band-shaped rubber material (20) to the means (6) for shaping strips of rubber material are moved, for conveying while adopting the holding contact, along the conveying direction from a first conveying position in the conveying direction to a second conveying position in which the rubber material (20) is grasped by the shaping means (6), and by which, after the rubber material (20) has been grasped by the means (6) for shaping strips of rubber material, the means (16, 17) for feeding strand-shaped, cord-shaped or band-shaped rubber material (20) to the means (6) for shaping strips of rubber material are moved in a controlled manner, during or after the release of the holding contact, transversely to the conveying direction of the strand-shaped, cord-shaped or band-shaped rubber material (20) from its holding position for holding the strand-shaped, cord-shaped or band-shaped rubber material (20), to a rest position.

## Revendications

1. Dispositif de bobinage d'un matériau de caoutchouc en forme de ruban sur une ébauche de bandage de roue, lequel dispositif présente :
une tête de bobinage (4) qui est configurée avec des moyens de formation (6) de rubans en matériau de caoutchouc (20),
des moyens d'amenée (16, 17) du matériau de caoutchouc (20) en forme de brin, de cordon ou de ruban aux moyens de formation (6) de rubans en matériau de caoutchouc (20),
des moyens de découpe (9) du matériau de caoutchouc (20) en forme de brin, de cordon ou de ruban en rubans de longueur prédéterminée et
des moyens (5) qui posent sur l'ébauche de bandage de roue les rubans découpés et formés,
**caractérisé en ce que**
les moyens d'amenée (16, 17) du matériau de caoutchouc (20) en forme de brin, de cordon ou de ruban aux moyens de formation (6) de rubans en matériau de caoutchouc (20) peuvent être déplacés de manière contrôlée transversalement à la direction d'avancement du matériau de caoutchouc (20) en forme de brin, de cordon ou de ruban depuis une position de repos jusque dans une position de maintien en vue d'établir un contact de maintien,
peuvent être déplacés transversalement par rapport à la direction de transport du matériau de caoutchouc (20) en forme de brin, de cordon ou de ruban depuis la position de maintien jusque dans une position de repos pour libérer le contact de maintien et
peuvent être déplacés dans la direction de transport depuis une première position de transport jusque dans une deuxième position de transport dans laquelle le matériau de caoutchouc (20) peut être saisi par les moyens de formation (6) pour le transport le long de la direction de transport lorsque la position de maintien a été prise.

2. Dispositif de bobinage selon les caractéristiques de la revendication 1, dans lequel des moyens (6, 16, 17, 14, 15, 13) sont formés pour allonger longitudinalement de manière contrôlée les tronçons de longueur prédéterminée du matériau de caoutchouc (20) en forme de brin, de cordon ou de ruban à la longueur prédéterminée pour la découpe.

3. Dispositif de bobinage selon les caractéristiques de la revendication 2, dans lequel les moyens de formation (6) des rubans découpés et les moyens d'amenée (16, 17) du matériau de caoutchouc (20) en forme de brin, de cordon ou de ruban aux moyens de formation (6) de rubans en matériau de caoutchouc sont configurés de manière à coopérer comme moyens (6, 16, 17) qui allongent longitudinalement de manière contrôlée les tronçons de longueur prédéterminés du matériau de caoutchouc (20) en forme de brin, de cordon ou de ruban pour former les bords de coupe.

4. Dispositif de bobinage selon les caractéristiques de la revendication 3, dans lequel les moyens de formation (6) des rubans découpés et les moyens d'amenée (16, 17) du matériau de caoutchouc en forme de brin, de cordon ou de ruban vers les moyens de formation (6) de rubans en matériau de caoutchouc sont configurés de manière à pouvoir être écartés et rapprochés les unes des autres de manière contrôlée et coopérer ainsi comme moyens (6, 16, 17) qui allongent longitudinalement de manière contrôlée les tronçons de longueur prédéterminée du matériau de caoutchouc (20) en forme de brin, de cordon ou de ruban en vue de leur découpe.

5. Dispositif de bobinage selon les caractéristiques d'une ou plusieurs des revendications précédentes, dans lequel les moyens de formation (6) des rubans découpés présentent une calandre (6).

6. Dispositif de bobinage selon les caractéristiques d'une ou plusieurs des revendications précédentes, dans lequel les moyens de pose (5) des rubans découpés et formés sur l'ébauche de bandage présentent une surface de guidage qui se développe en rotation autour d'un axe de rotation et en particulier entraînée pour guider et repousser le ruban sur l'ébauche de bandage.

7. Dispositif de bobinage selon les caractéristiques d'une ou plusieurs des revendications précédentes, dans lequel les moyens d'amenée (16, 17) du matériau de caoutchouc (20) en forme de brin, de cordon ou de ruban aux moyens de formation (6) de rubans en matériau de caoutchouc peuvent être déplacés de manière contrôlée transversalement à la direction du transport du matériau de caoutchouc en forme de brin, de cordon ou de ruban depuis une position de repos jusque dans une position de maintien en vue d'établir le contact de maintien, peuvent être déplacés transversalement par rapport à la direction du transport du matériau de caoutchouc (20) en forme de brin ou de ruban depuis la position de maintien jusque dans la position de repos pour libérer le contact de maintien, peuvent être déplacés dans la direction de transport depuis une première position de transport jusque dans une deuxième position de transport dans laquelle le matériau de caoutchouc peut être saisi par les moyens de formation (6) pour être transporté dans la direction de transport lorsque la position de maintien a été prise et peuvent être reculés de nouveau dans le sens opposé à la direction de transport jusque dans une troisième position de transport pour l'allongement du matériau de caoutchouc après la saisie du matériau de caoutchouc par les moyens de formation (6).

8. Dispositif de bobinage selon les caractéristiques d'une ou plusieurs des revendications précédentes, dans lequel les moyens d'amenée (16, 17) du matériau de caoutchouc (20) en forme de brin, de cordon ou de ruban aux moyens de formation (6) de rubans en matériau de caoutchouc sont des éléments de maintien (16, 17) qui peuvent être actionnés pneumatiquement ou hydrauliquement dans la direction transversale par rapport à la direction du transport.

9. Dispositif de bobinage selon les caractéristiques d'une ou plusieurs des revendications précédentes, dans lequel les moyens d'amenée (16, 17) du matériau de caoutchouc (20) en forme de brin, de cordon ou de ruban aux moyens de formation (6) de rubans en matériau de caoutchouc sont deux éléments de maintien (16, 17) disposés l'un en face de l'autre symétriquement par rapport au plan de transport et actionnés pneumatiquement ou hydrauliquement dans la direction transversale par rapport à la direction du transport.

10. Dispositif de bobinage selon les caractéristiques d'une ou plusieurs des revendications précédentes, dans lequel les moyens d'amenée (16, 17) du matériau de caoutchouc (20) en forme de brin, de cordon ou de ruban aux moyens de formation (6) de rubans en matériau de caoutchouc sont formés dans une plaque de montage (13) montée dans le cadre de la tête de bobinage de manière à pouvoir être rapprochée et éloignée de manière contrôlée, en particulier par coulissement, des moyens de formation (6) de rubans en matériau de caoutchouc.

11. Dispositif de bobinage selon les caractéristiques d'une ou plusieurs des revendications précédentes, dans lequel la tête de bobinage (4) est configurée de manière à pouvoir être rapprochée et éloignée de manière contrôlée de la surface de l'ébauche de bandage qui doit être garnie.

12. Procédé pour amener un matériau de caoutchouc en forme de ruban sur une tête de bobinage (4) qui sert à bobiner le matériau de caoutchouc en forme de ruban sur une ébauche de pneu, dans lequel :
un matériau de caoutchouc en forme de brin, de cordon ou de ruban est d'abord amené dans un dispositif de formation (6),
des moyens d'amenée (16, 17) du matériau de caoutchouc (20) en forme de brin, de cordon ou de ruban à des moyens de formation (6) de rubans en matériau de caoutchouc sont déplacés de manière contrôlée dans la direction transversale par rapport à la direction de transport du matériau de caoutchouc (20) en forme de brin, de cordon ou de ruban amené à la tête de bobinage (4), depuis une position de repos jusque dans une position de maintien pour saisir le matériau de caoutchouc (20) en forme de brin, de cordon ou de ruban,
ensuite, après saisie du matériau de caoutchouc (20) en forme de brin, de cordon ou de ruban, les moyens d'amenée (16, 17) du matériau de caoutchouc (20) en forme de brin, de cordon ou de ruban sont déplacés vers les moyens (6) de formation de rubans en matériau de caoutchouc le long de la direction du transport pour les déplacer dans la direction de transport tout en maintenant le contact de maintien depuis une première position de transport jusque dans une deuxième position de transport dans laquelle le matériau de caoutchouc (20) est saisi par les moyens de formation (6) et
après que le matériau de caoutchouc (20) a été saisi par les moyens de formation (6) de rubans en matériau de caoutchouc, les moyens d'amenée (16, 17) du matériau de caoutchouc (20) en forme de brin, de cordon ou de ruban sont déplacés de manière contrôlée en libérant le maintien de contact ou après la libération du maintien de contact vers les moyens de formation (6) de rubans en matériau de caoutchouc, transversalement à la direction du transport du matériau de caoutchouc (20) en forme de brin, de cordon ou de ruban, depuis la position de maintien qui maintient le matériau de caoutchouc (20) en forme de brin, de cordon ou de ruban jusque dans une position de repos.
